# EUROPÄISCHE PATENTSCHRIFT

(11) **EP 0 830 778 B1**
(45) Veröffentlichungstag und Bekanntmachung des Hinweises auf die Patenterteilung: **04.09.2002**
(21) Anmeldenummer: 96919635.1
(22) Anmeldetag: 03.06.1996
(51) Int. Cl.: H04M 1/72

(54) **TRAGBARE COMPUTER- UND TELEKOMMUNIKATIONSVORRICHTUNG**
PORTABLE COMPUTER AND TELECOMMUNICATIONS EQUIPMENT
ENSEMBLE COMBINE ORDINATEUR-TELEPHONE PORTABLE

(30) Priorität: 02.06.1995 DE 19520947
(43) Veröffentlichungstag der Anmeldung: 25.03.1998
(73) Patentinhaber: Constin Design Gmbh, 10785 Berlin (DE)
(72) Erfinder: CONSTIEN, Hans-Peter, D-10785 Berlin (DE)
(74) Vertreter: Hengelhaupt, Jürgen, Dipl.-Ing.
(86) Internationale Anmeldenummer: DE9601005
(87) Internationale Veröffentlichungsnummer: WO96038970

(56) Entgegenhaltungen:
- EP-A- 0 472 361
- EP-A- 0 651 544
- DE-A- 4 017 690
- DE-A- 4 108 169
- US-A- 5 303 291
- US-A- 5 324 925
- US-A- 5 414 444
- IBM TECHNICAL DISCLOSURE BULLETIN, Bd. 37, Nr. 6A, 1.Juni 1994, NEW YORK, Seiten 449-453, XP000455841 "PERSONAL COMMUNICATOR CONFIGURATIONS"

## Beschreibung

Die Erfindung bezieht sich auf eine als Handtelefon mit Computermodul ausgebildete tragbare Computer- und Telekommunikationsvorrichtung nach dem Oberbegriff des Hauptanspruchs.

Derartige tragbare Computer- und Telekommunikationsvorrichtungen werden insbesondere in der mobilen Telefonie sowie zur Erstellung und Übersendung von Fax-Nachrichten sowie zum Zugriff auf Online-Dienste und weiterhin als mobile Computer verwendet.

Bekannt sind tragbare mobile Telefone (als Handtelefone meist "Handy" genannt) sowie eine Vielzahl von Kleingeräten als Taschenrechner, Datenbanken und elektronische Notizbücher, die bei minimierten Abmessungen permanent zum persönlichen Gebrauch mitgeführt werden können. Personalcomputer mit text- bzw. grafikfähigen Bildschirmen sind im Format der sogenannten Laptops bzw. Notebooks bekannt, welche jedoch noch immer etwa DIN A4-Größe und ein erhebliches Gewicht aufweisen.

Aus der EP 0 472 361 B1 ist eine gattungsmäßige, portable Computer- und Telekommunikationsvorrichtung mit in ein und demselben Gehäuseaufbau integriertem Computer und Mobiltelefon bekannt; dieses Gehäuse enthält getrennte Tastaturteile für den Computer und für das Mobiltelefon. Auf der Außenseite ist die Tastatur für das Mobiltelefon angeordnet und auf der Innenseite ist eine zusätzliche Tastatur für den Computer vorgesehen. Bei geschlossenem Deckel ist die Tastatur des Computers verdeckt und die Tastatur des Mobiltelefons auf der Außenseite des Deckels zugänglich.

Nachteilig an der in der EP 0 472 361 B1 offenbarten Telekommunikationsvorrichtung ist, daß das Gerät nicht wie bekannte Mobiltelefone in der Art eines Handtelefons benutzt werden kann, da die Anordnung der Telefontastatur sowie des Mikrofons und des Lautsprechers in anderer Weise erfolgt. Bei diesem Gerät ist insbesondere auch keine bei Mobiltelefonen in der Art eines Handtelefons übliche Einhandbedienung der Telekommunikationsvorrichtung möglich, da das Gerät hierzu erst um 90 Grad um seine Querachse, und anschließend zusätzlich erneut um 90 Grad, diesmal um seine Längsachse, gedreht werden muß.

Weiterhin ist dieses Gerät bezüglich des Funktionsumfangs nicht erweiterbar, und kann auch nicht mit weiterer Energiekapazität für eine längere Betriebsdauer in Form von zusätzlichen Energiemodulen versehen werden.

Aus der DE 41 08 169 A1 ist eine Telefoneinrichtung bekannt, welche als mobile Kommunikationseinrichtung einen Funktelefonbetrieb in Verbindung mit Computerarbeit und Datenübermittlung ermöglicht.

Ein wahlweise tragbares und in einem Fahrzeug montierbares, mit einem PC mit Tastatur und einer Funk- bzw. Autotelefon-Sende/Empfangseinheit ausgerüstetes Gerät hat nach Art eines Laptops eine Klappe mit einem an ihrer Vorderseite angeordneten Bildschirm. An der Rückseite der Klappe ist eine Halterung für einen Telefonhandapparat angeordnet. Der Handapparat überragt die Klappe seitlich. Bei zugeklappter Klappe - PCT-Tastatur von der Klappe zugedeckt - ist der Handapparat zum Abnehmen frei zugänglich und die an seiner Oberseite angeordneten Wähl- und Bedientasten sind betätigbar. Bei schräg nach hinter geklappter Klappe - PC-Tastatur freigegeben - sind die Sprech- und Hörmuschel des an der Klappenrückseite gehalterten Handapparats einem Betrachter des Bildschirms zugewandt und haben einen freien Schallweg zu diesem.

Nachteilig an dieser Lösung ist, daß eine Verwendung als Handy weder vorgesehen noch möglich ist. Es handelt sich hierbei um zwei völlig separate Geräte (Handtelefonapparat und Laptop), welche zusammengefügt sind. Hinzu kommt, daß durch die überstehenden Teile des Handapparates das Gerät sehr anfällig ist gegen Stoßbelastungen, insbesondere beim Herunterfallen.

Die vorliegende Erfindung besitzt die Aufgabe, eine tragbare Computer- und Telekommunikationsvorrichtung zur Verfügung zu stellen, die zum Senden und Empfangen von Sprache, Daten, Texten und/oder Grafiken sowie zur Erstellung und Bearbeitung dieser Daten, Texte und/oder Grafiken geeignet ist, d.h., sie soll die Funktionalität eines mobilen Telefons mit der Funktionalität eines Computers in einem einzigen Gerät vereinigen. Weiterhin soll die erfindungsgemäße tragbare Computer- und Telekommunikationsvorrichtung für zusätzliche Anwendungen offen und erweiterbar sein.

Diese Aufgabe wird durch eine als Handtelefon mit Computermodul ausgebildete tragbare Computer- und Telekommunikationsvorrichtung nach dem Oberbegriff des Anspruchs 1 in Verbindung mit seinen kennzeichnenden Merkmalen gelöst.

Durch die Anordnung des Computers und der Telekommunikationseinrichtung in zwei verschiedenen Modulen ist es möglich, beide Module oder einzelne Baugruppen getrennt zu entwickeln bzw. bereits entwickelte Module oder Baugruppen, beispielsweise der Telekommunikationseinrichtung, unter lediglich geringer Modifikation zu verwenden. Dadurch wird der Entwicklungs- und konstruktive Aufwand stark reduziert. Weiterhin wird erreicht, daß der Benutzer der erfindungsgemäßen tragbaren Computer- u. Telekommunikationsvorrichtung beim Einsatz der erfindungsgemäßen Vorrichtung als Faksimile-Überträger, als Modem, als Telefon oder als Computer, sowie für sämtliche gemischten Anwendungen eine maximale Flexibilität besitzt, ferner größtmöglichen Bedienkomfort bei einfachster Handhabung genießt. Wahlweise kann der Benutzer die Funktionen beider Module getrennt bzw. zugleich nutzen, wie es bei-spielsweise bei der Erstellung und dem Versand einer Faksimile-Nachricht aus dem zur Erstellung der Nachricht verwendeten Programm heraus erfolgt. Der Benutzer kann jedoch aufgrund der Anordnung der Tastatur der Telekommunikationseinrichtung auf der Außenseite des entsprechenden Moduls jederzeit auch die Telekommunikationseinrichtung im zusammengeklappten Zustand der erfindungsgemäßen Vorrichtung benutzen. Dadurch ergibt sich die Handlichkeit eines herkömmlichen Handtelefons und die Funktionalität eines Personalcomputers in Verbindung mit der Telekommnikationseinrichtung.

Die Trennung des Computers und der Telekommunikationseinrichtung in verschiedene Module sowie die Anordnung der jeweils zugeordneten Tastaturen bzw. Bildschirme ermöglicht es, ein Minimum an Datenleitungen zwischen dem Computer und der Telekommunikationseinrichtung vorzusehen. Dadurch ist der konstruktive Aufwand verringert, und die Möglichkeit für Beschädigungen bzw. Defekte der Datenübertragung zwischen Computer und Telekommunikationseinrichtung minimiert.

Vorteilhafte Weiterbildungen der erfindungsgemäßen tragbaren Computer und Telekommunikationsvorrichtung werden in den abhängigen Ansprüchen gegeben.

Wird die Computeranzeigeeinheit an dem die Telekommunikationseinrichtung enthaltenden Modul angeordnet, so wird eine Anordnung der Computertastatur und der Computeranzeigeeinheit erzielt, die der Anordnung eines herkömmlichen Notebooks entspricht. Dadurch ist eine besonders ergonomische Arbeitsweise mit dem Computer der erfindungsgemäßen Vorrichtung möglich.

Schließen die Außenflächen der mindestens zwei Module in zusammengeklapptem Zustand glatt miteinander ab, so wird die Handlichkeit insbesondere bei der Verwendung als Handy (mobiles Handtelefon) im zusammengeklappten Zustand erheblich verbessert und zugleich die Computertastatur und Computeranzeigeeinheit gegen Verschmutzung geschützt. Daneben ist so die Anzeigeeinheit des Computers wirksam gegen manuelle Beschädigung gesichert.

Die erfindungsgemäße Vorrrichtung ist durch weitere Module beliebig erweiterbar, beispielsweise durch zusätzliche Energiespeichermodule, Datenspeichermodule, Datenverarbeitungsmodule, Diskettenlaufwerkmodule, Harddisk-Module, Radio- oder TV-Tuner-Module, mit Chipoder Magnetkartenlesem, mit PCMCIA-Steckplätzen oder weiteren Kommunikationseinrichtungen, beispielsweise einer zusätzlichen Mobilfunkeinrichtung für künftigen satellitengestützten Mobilfunk als optional mitführbare Aufrüstung der vorhandenen Telekommunikationseinrichtung. Die Energiespeichereinheit kann als Energiespeichermodul außerhalb des Computers als separates Modul angeordnet sein, oder auch beispielsweise als innerhalb des Computermoduls integrierter Akkumulator.

Werden auf einer der Außenflächen der mindestens zwei Module ein Mikrofon und ein Lautsprecher angeordnet und mit der Telekommunikationseinrichtung verbunden, so kann die Vorrichtung als mobiles Telefon verwendet werden, mit der besagten, für Handtelefone charakteristischen Funktionalität. In der Konfiguration mit der Unterbringung des Mikrofons und des Lautsprechers auf der Außenseite des Telekommunikationsmoduls, also in einer Ebene mit Tastatur und Anzeigeeinrichtung der Telekommunikationseinrichtung ergeben sich die besagten funktionellen Vorteile in Handhabung und bezüglich reduzierten konstruktiven Aufwandes. Im Fall der Anordnung von Mikrofon und Lautsprecher auf der Rückseite der Vorrichtung, d. h., auf der Außenseite des den Computer enthaltenden Moduls, ergeben sich Vorteile bezüglich der Ausnutzung des gegebenen Einbauraums und der Gestaltung des Moduls, das die Telekommunikationseinrichtung enthält.

Besonders vorteilhaft ist es, wenn zusätzlich ein Schalter vorgesehen ist, durch den auf einen Freisprechmodus umgeschaltet werden kann, so daß im aufgeklappten Zustand der erfindungsgemäßen Vorrichtung gleichzeitig sowohl der Computer als auch die Telekommunikationseinrichtung als Handtelefon benutzt werden können. Dies ermöglicht weiterhin eine vereinfachte Verwendung einer Adressbuchfunktion, die in dem Computer implementiert ist, zwecks Herstellung von Telefonverbindungen mit direkter Anwahl aus dem Adressenspeicher des Computers.

Im folgenden werden einige vorteilhafte Ausführungsformen der vorliegenden Erfindung beschrieben.

Die erfindungsgemäße Vorrichtung besitzt in etwa die Größe einer länglichen Brieftasche; die Grundversion besteht aus drei Modulen, die miteinander verbunden sind. Ein zuoberst angeordnetes Modul enthält eine Telekommunikationseinrichtung und auf seiner nach außen gewandten Seite eine Tastatur zur Steuerung der Telekommunikationseinrichtung, d. h., eine Telefontastatur, ein Telefondisplay, ein Mikrofon und einen Lautsprecher als Hörer. Ein zweites, darunter angeordnetes Modul enthält einen Computer und einen Steckplatz beispielsweise für Karten im Scheckkartenformat, für Magnetstreifenkarten, oder auch für Speicherkarten im PCMCIA-Standard. Oberstes und darunter angeordnetes Modul sind über ein Scharnier drehbar aneinander angelenkt. Weiterhin weist die erfindungsgemäße Vorrichtung ein weiteres Modul auf, daß als Akkumulator zur Energieversorgung ausgebildet ist. Die erfindungsgemäße Vorrichtung besitzt weiterhin eine Antenne, die beweglich, d. h. ausziehbar bzw. einschiebbar in der Achse des das oberste und das darunter angeordnete Modul verbindenden Scharniers angeordnet ist, bzw. die ein Teil dieses Schamiers darstellt. Weiterhin weist das den Computer enthaltende Modul einen Knopf zur Verstellung der Lautstärke des Lautsprechers sowie eine Taste auf, die als Hörerabnahmetaste fungiert.

Betrachtet man dieselbe erfindungsgemäße Vorrichtung im aufgeklappten Zustand, so trägt das hochgeklappte oberste Modul auf seiner Innenfläche eine Computeranzeigeeineinrichtung, und das am Scharnier angelenkte zweite Modul trägt auf der dem obersten Modul zugewandten Seite eine Computertastatur. Die Computertastatur sowie die Anzeige der Computeranzeigeeinrichtung sind zeilen- und spaltenweise so geordnet, daß die Zeilen entlang der Längserstreckung der erfindungsgemäßen Vorrichtung verlaufen.

An einer der Stirnflächen der erfindungsgemäßen Vorrichtung sind einer oder mehrere Schnittstellenanschlüsse vorhanden, beispielsweise zum Austausch von Daten mit anderen Computern über serielle, parallele Schnittstellen bzw. über Infrarot-Schnittstellen. Durch den modularen Aufbau der erfindungsgemäßen Vorrichtung ist ohne weiteres eine Erweiterung um zusätzliche Energiemodule, Speichermodule oder sonstige Modulbausteine mit integrierten Karten für Zusatzfunktionen des Computers möglich. Weiterhin können Funktionen wie Radio- oder TV-Empfang implementiert werden. Die Computeranzeigeeinheit besteht aus einem LCD-Monitor oder einem vergleichbar dünn bauenden Display, und kann auch berührungssensitiv als sogenannter "Touchscreen" zur Realisierung zusätzlicher Funktionen oder Befehlstasten und zur Bedienerführung ausgebildet sein. Die Befehlstasten können natürlich auch über mechanisch zu bedienende Elemente neben den korrespondierenden Feldern des Displays angeordnet sein.

Die erfindungsgemäße Vorrichtung kann im zusammengeklappten Zustand wie ein herkömmliches Handtelefon benutzt werden. Alternativ ist durch die zeilenweise Anordnung des Computerdisplays sowie der Computeranzeigeeinrichtung eine normale Benutzung als Computer möglich. Ein Datenaustausch zwischen der Telekommunikationseinrichtung und dem Computer zur automatischen Ansteuerung beispielsweise der Telefonnummernwahl durch den Computer ist vorgesehen. Weiterhin können über den Computer erstellte Faksimile-Mitteilungen unmittelbar aus dem zur Erstellung der Mitteilungen verwendeten Benutzerprogramm über die Telekommunikationseinrichtung versandt werden. Weiterhin ist es möglich, mit dem Computer unmittelbar über die Telekommunikationseinrichtung Online-Verbindungen zu entsprechenden Diensteanbietem herzustellen.

Eine in ähnlicher Weise wie vorangehend beschrieben aufgebaute erfindungsgemäße Vorrichtung weist statt eines Energiemoduls einen Energiespeicher, beispielsweise einen Akkumulator, auf, der in das Computermodul eingelassen ist. Dadurch ergeben sich eine besonders kompakte Bauweise und günstige Anordnungen der einzelnen Komponenten der Computer- und Telekommunikationsvorrichtung. Der Energiespeicher kann auch vollständig durch das Gehäuse des Computermoduls umschlossen und verdeckt sein.

In einer Ausführungsform der erfindungsgemäßen Vorrichtung befinden sich das Mikrofon und der Lautsprecher auf der nach außen gewandten Seite des Computermoduls, während sich erfindungsgemäß die Telekommunikationseinrichtung in dem obersten Modul befindet. Je nach verfügbarem Raum in den beiden oberen Modulen ist es günstiger, das Mikrofon und den Lautsprecher, in dem die Telekommunikationseinrichtung enthaltenden obersten Modul, oder auch in dem den Computer enthaltenden, darunter angeordneten Modul unterzubringen.

Eine weitere erfindungsgemäße Vorrrichtung, die wie die bisher genannten ebenfalls aus einem ersten Modul mit Telekommunikationseinheit und einem zweiten, einen Computer enthaltenden Modul, besteht, enthält ein weiteres Modul, das eine Energiespeichereinheit, beispielsweise einen Akkumulator, aufweist. Zusätzlich zu den bisher dargestellten Vorrichtungen wird eine weitere Ausführung vorgeschlagen, die um ein Zusatzmodul erweitert ist, das beispielsweise einen zusätzlichen Speicher aus Speicherchips enthalten kann. Das Zusatzmodul kann jedoch auch aus einem weiteren Energiespeicher bestehen, durch den die Betriebsdauer der Computer- und Telekommunikationsvorrichtung erheblich verlängert werden kann.

Eine weiterere Ausführungsformen besteht darin, daß das oberste Modul ein Mikrofon enthält, das sowohl zu der außenliegenden als auch zu der Innenseite des Moduls orientiert ist. Dadurch wird es ermöglicht, einerseits im zusammengeklappten Zustand der erfindungsgemäßen Vorrichtung die Vorrichtung wie ein herkömmliches Handtelefon zu benutzen, während im aufgeklappten Zustand über einen Schalter auf Freisprechen umgeschaltet werden kann, so daß die Sprachaufzeichnung über das zur Innenseite des obersten Moduls orientierte Mikrofon erfolgt. Der Lautsprecher des obersten Moduls kann dabei sowohl als Hörer im Telefonbetrieb als auch als Lautsprecher im Computerbetrieb verwendet werden. Seine Lautstärke kann durch den Lautstärkeregler verändert werden.

Ein weiteres Ausführungsbeispiel der erfindungsgemäßen Vorrichtung bietet im zusammengeklappten Zustand an der nach außen gerichteten Fläche des obersten Moduls den Anblick eines herkömmlichen Handtelefons mit einer Tastatur und einem Display zur Darstellung beispielsweise von Rufnummern oder aufgerufenen Funktionen bzw. einer Bedienungsoberfläche. An eine Audiobuchse können ein Kopf- bzw. Ohrhörer oder entsprechend geeignete Lautsprecher angeschlossen werden. Über eine kombinierte In/Out-Buchse kann auch ein komplettes Sprechzeug mit Mikrofon-/Kopfhörer angeschlossen werden. In sämtlichen genannten Ausführungsbeispielen ist die Antenne ausziehbar. Wird die Telekommunikationseinrichtung nicht verwendet, so kann die Antenne entlang ihrer Längsachse in dem sie aufnehmenden Scharnier rastbar versenkt werden. Im Fall einer vollständig im Gehäuse versenkten Antenne entfällt dies, da Sende- bzw. Empfangsmöglichkeit auch im vollversenkten Zustand gegeben sind.

## Patentansprüche

1. Handtelefon mit integriertem Computermodul, bestehend aus einer schnurlosen Telekommunikationseinrichtung und einem Computer mit Computertastatur und Computeranzeigeineheit, wobei das Handy aus mindestens zwei flachen, länglichen Modulen besteht, die drehbar so aneinander angelenkt sind, daß sie im zusammengeklappten Zustand mit je einer ihrer Flächen als Innenfläche aneinanderliegen, wobei die Computertastatur und die Computeranzeigeeinheit auf diesen Innenflächen angeordnet sind und an der Außenseite eines der Module eine Tastatur zur Steuerung der Telekommunikationseinrichtung vorgesehen ist,
wobei der Computer in einem ersten Modul und die Telekommunkationseinrichtung zusammen mit der Tastatur zur Steuerung der Telekommunikationseinrichtung in einem zweiten Modul angeordnet ist, und wobei sich auf einer der Außenflächen der mindestens zwei Module, ein Mikrofon und ein Lautsprecher befindet,
**dadurch gekennzeichnet,**
**daß** auf der Innenseite des zweiten Moduls eine erste Anzeigeeinheit für den Computer und auf der Außenseite des zweiten Moduls eine zweite Anzeigeeinheit für die Telekommunikationseinrichtung angeordnet ist und an dem den Computer enthaltenden ersten Modul weitere Module angeordnet werden können, wobei die Außenflächen der mindestens zwei Module im zusammengeklappten Zustand zur Bildung einer Einheit glatt miteinander abschließen.

2. Handtelefon nach Anspruch 1,
**dadurch gekennzeichnet,**
**daß** die Tastatur zur Steuerung der Telekommunikationseinrichtung und/oder die zweite Anzeigeeinheit für die Telekommunikationseinrichtung so angeordnet sind, daß die Tastatur zur Steuerung der Telekommunikationseinrichtung und die Anzeige der zweiten Anzeigeeinheit in Zeilen und gegebenenfalls in Spalten angeordnet sind, wobei die Zeilen quer zur Längsrichtung der Module verlaufen.

3. Handtelefon nach Anspruch 1,
**dadurch gekennzeichnet,**
**daß** an und/oder in dem den Computer enthaltenden Modul ein Energiemodul angeordnet ist.

4. Handtelefon nach Anspruch 3,
**dadurch gekennzeichnet,**
**daß** das Energiemodul außerhalb des den Computer enthaltenden Moduls an diesem angeordnet ist und daß die Außenflächen dieser beiden Module zur Bildung einer Einheit glatt miteinander abschließen.

5. Handtelefon nach einem der Ansprüche 3 oder 4,
**dadurch gekennzeichnet,**
**daß** das Energiemodul einen Akkumulator aufweist.

6. Handtelefon nach mindestens einem der vorhergehenden Ansprüche,
**dadurch gekennzeichnet,**
**daß** das den Computer enthaltende Modul und/oder weitere Module Energiespeichermodule, Datenspeichermodule, Datenverarbeitungsmodule, Radio- oder TV-Tunermodule zusätzliche Telekommunikationssende- und Empfangseinheiten Disketten- oder Harddisk-Laufwerke, Chip- oder Magnetstreifenkartenleser, PCMCIA-Speicherkartensteckplätze, Steckkontakte für parallele und/oder serielle Schnittstellen und/oder sonstige Schnittstellen aufweisen.

7. Handtelefon nach mindestens einem der vorhergehenden Ansprüche,
**dadurch gekennzeichnet,**
**daß** die Module über Scharniere, Steck- oder Schnappverschlüsse miteinander verbunden sind.

8. Handtelefon nach Anspruch 7,
**dadurch gekennzeichnet,**
**daß** in das Scharnier eine fest eingebaute oder bewegliche Antenne integriert ist.

9. Handtelefon nach Anspruch 1,
**dadurch gekennzeichnet,**
**daß** eine Antenne vollständig versenkt in dem die Telekommunikationseinrichtung aufweisendenden Modul eingebaut ist.

10. Handtelefon nach mindestens einem der vorhergehenden Ansprüche,
**dadurch gekennzeichnet,**
**daß** das den Computer enthaltendende Modul einen Schalter zum Umschalten auf Freisprechmodus, einen Sprechbereitschalter und/oder einen Lautstärkeregler für einen Lautsprecher aufweist.

11. Handtelefon nach mindestens einem der vorhergehenden Ansprüche,
**dadurch gekennzeichnet,**
**daß** die Telekommunikationseinrichtung ein Funkgerät aufweist.

12. Handtelefon nach einem der vorhergehenden Ansprüche,
**dadurch gekennzeichnet,**
**daß** die Computertastatur und die Computeranzeigeeinheit zur Steuerung und Kontrolle der Telekommunikationseinrichtung verwenbar sind.

13. Handtelefon nach mindestens einem der vorhergehenden Ansprüche,
**dadurch gekennzeichnet,**
**daß** die Computeranzeigeeinheit ein berührungsintensiver Flachbildschirm ist.

14. Handtelefon nach mindestens einem der vorhergehenden Ansprüche,
**dadurch gekennzeichnet,**
**daß** die Computertastatur und die Computeranzeigeeinheit auf den einander gegenüberliegenden Innenflächen zweier Module zeilen- und gegebenenfalls spaltenweise so angeordnet sind, daß die Zeilen der Computertastatur bzw. der Computeranzeigeeinheit in Längsrichtung der Module verlaufen.

## Claims

1. Hand-held telephone with an integrated computer member consisting of a cordless telecommunication unit and a personal computer with a keyboard and a computer display, the device consisting of at least two flat, elonguated members which are joined to one another in a movable way so that in the closed position their inner surfaces are adjacent, the keyboard and the computer display being arranged on the inner surfaces of these two members, and the outer surface of one of the members comprises a keyboard for operating the telecommunication unit,
whereby the computer module being situated in one member of the device and the telecommunication unit together with the keys for operating the telecommunication unit in a second member, whereby on one of the outer surfaces of the at least two members there is arranged a microphone and a speaker,
**characterized in that**
on the inner surface of the second member there is arranged a first display for the personal computer and on the outer surface of the second member there is arranged a second display for the telecommunication unit and that on the first member containing the personal computer can be arranged additional members, whereby in the closed position the outer surfaces of at least two members form one unit without any of its parts jutting out.

2. Hand-held telephone according to claim 1,
**characterized in that** the keys for operating the telecommunication unit and/or the second display for the telecommunication unit are arranged in such a way that the keys for operating the telecommunication unit and the display of the second display unit are arranged in lines and occasionally columns so that the lines form right angles to the long side of the members.

3. Hand-held telephone according to claim 1, **characterized in that** a power module is arranged at and/or inside of the member containing the computer.

4. Hand-held telephone according to claim 3,
**characterized in that** the power unit is arranged outside of the member containing the personal computer and that the outer surfaces of these two members form one unit without any part jutting out.

5. Hand-held telephone according to either claim 3 or 4,
**characterized in that** the power unit comprises an accumulator.

6. Hand-held telephone according to at least one of the claims mentioned above,
**characterized in that** the member containing the personal computer and/or other members comprise power storage modules, data storage modules, data processing modules, radio- or tv-tuning modules, additional send/receipt units for the usage of the telecommunication unit, disk or hard disk drives, chip card readers or magnetic card readers, PCMCIA-slots for memory cards, plug connections for parallel and/or serial interfaces and/or other interfaces.

7. Hand-held telephone according to at least one of the claims mentioned above, **characterized in that** the members are connected with one another by hinges, plug-type lecks and spring-leaded catches or others.

8. Hand-held telephone according to claim 7,
**characterized in that** a fixed or movable antenna is integrated into the hinge.

9. Hand-held telephone according to claim 1,
**characterized in that** an antenna is completely submerged in the member comprising the telecommunication unit.

10. Hand-held telephone according to at least one of the claims mentioned above,
**characterized in that** the member containing the personal computer comprises a switch for changing to the hands free call function, as well as a switch allowing the user to communicate after the dial tone and/or a volume regulator for a speaker.

11. Hand-held telephone according to at least one of the claims mentioned above,
**characterized in that** the telecommunication unit comprises a mobile radio telephone.

12. Hand-held telephone according to one of the claims mentioned above,
**characterized in that** the keyboard for the personal computer and the computer display can be used to operate and control the telecommunication unit.

13. Hand-held telephone according to at least one of the claims mentioned above,
**characterized in that** the computer display represents a touch screen.

14. Hand-held telephone according to at least one of the claims mentioned above,
**characterized in that** the lines and occasionally columns of the computer keyboard and the computer display are arranged on the inner surfaces of two members being situated opposite to one another in such a way that the lines of the computer keyboard and the computer display form a right angle with the long side of the members.

## Revendications

1. Téléphone portable à module informatique intégré, consistant en un équipement de télécommunications sans fil et un ordinateur à clavier et unité d'affichage informatiques, ledit appareil portable étant composé d'au moins deux modules plats allongés articulés de manière à pouvoir pivoter pour être en état refermé rabattus l'un contre l'autre par l'une de leurs surfaces en tant que surface intérieure, le clavier et l'unité d'affichage informatiques étant placés sur ces surfaces intérieures, et un clavier de commande de l'équipement de télécommunications étant prévu sur la surface extérieure de l'un des modules,
l'ordinateur étant disposé dans un premier module et l'équipement de télécommunications avec le clavier de commande de l'équipement de télécommunications dans un second module, et un microphone et un haut-parleur se trouvant sur une des surfaces extérieures des deux modules au moins,
**caractérisé en ce qu'**
une première unité d'affichage pour l'ordinateur est disposée sur la face intérieure du second module, et une seconde unité d'affichage pour l'équipement de télécommunications sur la surface extérieure du second module, et **en ce que** d'autres modules peuvent être disposés sur le premier module contenant l'ordinateur, les surfaces extérieures des deux modules au moins affleurant l'une contre l'autre en état refermé pour former un ensemble.

2. Téléphone portable selon la revendication 1,
**caractérisé en ce que**
le clavier de commande de l'équipement de télécommunications et/ou la seconde unité d'affichage pour l'équipement de télécommunications sont disposés de manière à organiser le clavier de commande de l'équipement de télécommunications et l'affichage de la seconde unité d'affichage en rangées et le cas échéant en colonnes, les rangées étant alors perpendiculaires à la longueur du module.

3. Téléphone portable selon la revendication 1,
**caractérisé en ce qu'**
un module électrique est disposé contre et/ou dans le module contenant l'ordinateur.

4. Téléphone portable selon la revendication 3,
**caractérisé en ce que**
le module électrique est disposé à l'extérieur du module contenant l'ordinateur, contre celui-ci, et **en ce que** les surfaces extérieures de ces deux modules se referment en affleurant l'une contre l'autre pour former un ensemble.

5. Téléphone portable selon l'une des revendications 3 ou 4,
**caractérisé en ce que**
le module électrique présente un accumulateur.

6. Téléphone portable selon l'une des revendications précédentes au moins,
**caractérisé en ce que**
le module contenant l'ordinateur et/ou d'autres modules présentent des modules d'accumulation d'énergie, de mémorisation de données, de traitement de données, des modules tuner radio ou TV, des unités supplémentaires d'émission et de réception de télécommunications, lecteurs de disquette ou de disque dur, lecteurs de carte à puce ou de carte à piste magnétique, slots pour cartes mémoire PCMCIA, contacts à fiche pour ports parallèles et/ou sériels et/ou autres interfaces.

7. Téléphone portable selon l'une des revendications précédentes au moins,
**caractérisé en ce que**
les modules sont raccordés entre eux par des charnières, des fermetures par pattes rentrantes ou des fermetures à cliquet.

8. Téléphone portable selon la revendication 7,
**caractérisé en ce qu'**
une antenne fixe ou amovible est intégrée à la charnière.

9. Téléphone portable selon la revendication 1,
**caractérisé en ce qu'**
une antenne est encastrée, entièrement noyée dans le module présentant l'équipement de télécommunications.

10. Téléphone portable selon l'une des revendications précédentes au moins,
**caractérisé en ce que**
le module contenant l'ordinateur présente un commutateur pour passer au mode mains libres, un commutateur de mise en service du mode vocal et/ou un régulateur de volume pour un haut-parleur.

11. Téléphone portable selon l'une des revendications précédentes au moins,
**caractérisé en ce que**
l'équipement de télécommunications présente un appareil radio.

12. Téléphone portable selon l'une des revendications précédentes,
**caractérisé en ce que**
le clavier et l'unité d'affichage informatiques sont utilisables pour la commande et le contrôle de l'équipement de télécommunications.

13. Téléphone portable selon l'une des revendications précédentes au moins,
**caractérisé en ce que**
l'unité d'affichage informatique est un écran plat tactile.

14. Téléphone portable selon l'une des revendications précédentes au moins,
**caractérisé en ce que**
le clavier et l'unité d'affichage informatiques sont disposés sur les surfaces intérieures opposées de deux modules en rangées et le cas échéant en colonnes, de manière à ce que les rangées du clavier ou de l'unité d'affichage informatiques soient alignées dans le sens de la longueur des modules.
